# EUROPÄISCHE PATENTANMELDUNG

(11) **EP 0 718 132 A1**
(43) Veröffentlichungstag der Anmeldung: **26.06.1996**
(21) Anmeldenummer: 95118938.0
(22) Anmeldetag: 01.12.1995
(51) Int. Cl.: B60H 1/00, B60H 1/24, B61D 27/00

(54) **Raumheizung eines Nutzfahrzeuges in Unterflur-Bauweise**

(30) Priorität: 24.12.1994 DE 4446596
(71) Anmelder: Firma J. Eberspächer, D-73730 Esslingen (DE)
(72) Erfinder: Hintennach, Markus, D-73666 Baltmannsweiler (DE); Hintennach, Hans, D-73666 Baltmannsweiler (DE)

(57) **Zusammenfassung**

Bei einer Raumheizung (1) in Unterflurbauweise eines Nutzfahrzeuges sind einfach aufgebaute Bodenströmer (5, 6, 7) in Form von Boden-Einströmern und Boden-Ausströmern vorgesehen, welche statische Bodenströmer, aber auch elektrisch oder thermodynamisch verschließbare Bodenströmer sein können.

## Beschreibung

Die Erfindung betrifft eine Raumheizung eines Nutzfahrzeuges mit Unterflur-Heizgerät und Unterflur-Versorgungsleitungen sowie mit Luftöffnungen ("Bodenströmern") in Höhe der Ladefläche des Nutzraums für einen Austritt der Heizluft und einen Eintritt der Rückluft.

Bekannte Frachtraumheizungen oder Heizungen begehbarer Räume von Bussen können, da die Ladeflächen der Lastkraftwagen und der Innenräume der Busse zumindest teilweise befahrbar oder begehbar sein müssen, nur entweder aufwendig an Decken oder Seitenwänden realisiert werden oder in Unterflurbauweise in der Ladefläche der Lastkraftwagen (oder der begehbaren Räume der Busse) ausgebildet sein. Raumheizungen in Unterflurbauweise weisen Lufteintritts- und Luftauslaßstutzen im Boden des Nutzfahrzeuges auf, in welche leicht Schmutz und Wasser aus dem Innenraum des Nutzfahrzeuges in das Innere des Heizungssystems bis hin zum Unterflur-Heizgerät gelangen kann. Durch die Verschmutzung und das eindringende Wasser treten bekanntermaßen oft Betriebsstörungen auf. Ein zuverlässiger Betrieb einer derartigen Heizung verlangt eine aufwendige Wartung und aufwendige Reinigung in vergleichsweise kurzen Zeitabständen.

Aufgabe der Erfindung ist die Schaffung einer Raumheizung der eingangs genannten Art, welche einfach aufgebaut ist und mit Hilfe einfacher Mittel zuverlässig bei geringem Wartungsaufwand betrieben werden kann.

Gelöst wird die der Erfindung zugrundeliegende Aufgabe durch eine Raumheizung der im Anspruch 1 angegebenen Art, welche Frachtraumheizung, aber auch eine Warmluft-Unterflur-Omnlbus-Heizung sein kann.

Vorteilhaft weitergebildet wird der Erfindungsgegenstand durch die Merkmale der Unteransprüche 2 bis 12.

Wesen der Erfindung ist, Bodenströmer, welche bündig mit der Ladefläche des Nutzraums abschließen, mit einer Schutzvorrichtung zu versehen, welche verhindert, daß Schmutz und/oder Wasser aus dem Innenraum des Nutzfahrzeuges in das Innere der Unterflur-Frachtraumheizung gelangen und diese im Betrieb beeinträchtigen kann. Der möglicherweise geringfügig eindringende Schmutz kann gegebenenfalls von Zeit zu Zeit auf einfache Weise entleert werden. Möglicherweise eindringendes Wasser kann unterseitig abfließen, und zwar separat von der Unterflur-Luftversorugngsleitung.

Die Bodenströmer, welche - je nach Strömungsrichtung der Luft - Boden-Einströmer oder Boden-Ausströmer sein können, können unterschiedlich ausgestaltet sein.

Eine erste Ausführungsvariante sieht einen statischen Bodenströmer vor, welcher in Höhe der Ladefläche einen festen zentralen Verschluß für eine zentrale Unterflur-Luftversorgungsleitung aufweist, wobei der Nutzraum über einen den zentralen Verschluß umgebenden Ringraum mit der zentralen Unterflur-Luftversorgungsleitung in Verbindung steht.

Zweckmäßigerweise weist die Unterseite des zentralen Verschlusses eine konische Umlenkeinrichtung auf, und es ist der Ringraum radial innen durch ein zylindrisches Gitterteil begrenzt.

Die Unterseite des Ringraums ist mit einem Schmutzfänger und mit einem Wasserablauf ausgebildet.

Eine besonders einfache Wartung ergibt sich, wenn der vorgenannte statische Bodenströmer ein zylindrisches, im Ringraum Radialstreben aufweisendes, abgesetztes Einsatzteil aufweist, welches in einem entsprechenden, im Boden des Nutzraums befestigten Gehäuseteil formschlüssig eingesetzt ist, wobei das Einsatzteil den zentralen Verschluß, und gegebenenfalls die Luftumlenkeinrichtung, das Gitterteil, den Ringspalt-Schmutzfänger sowie einen Ringspalt-Wasserdurchlauf enthält.

Eine weitere Ausführungsvariante eines Bodenströmers sieht einen bezüglich der Ladefläche des Nutzfahrzeuges verschließbaren Bodenströmer vor, welcher einerseits elektrisch und in einer weiteren Variante thermodynamisch betätigt werden kann. Die Bodenströmer weisen insbesondere einen seitlichen Anschluß für die Unterflur-Luftversorgungsleitung und einen zentralen unteren Wasserablauf auf, wobei in Ladeflächehöhe ein federvorgespannter höhenverstellbarer zentraler Verschluß ausgebildet ist, welcher in eine angehobene geöffnete Stellung und in eine abgesenkte, bündig mit der Ladefläche des Nutzraums verlaufende geschlossene Stellung betätigt werden kann.

Der Verschluß eines elektrisch verschließbaren Bodenströmers ist über einen elektrischen Antrieb in Unterflurbauweise in Höhenrichtung betätigbar, und zwar durch einen elektrischen Impuls, welcher bei Einschalten des Unterflur-Heizgerätes auch den elektrischen Antrieb einschaltet, bis dieser sich selbstätig wieder ausschaltet, wenn der zentrale Verschluß vollständig angehoben ist und hierbei geringfügig aus der Ladefläche des Nutzraums hervorsteht. In letztgenannter Lage kann gleichwohl eine Person oder eine Fracht sich auf den angehobenen zentralen Verschluß stellen bzw. gestellt werden. Ist dies der Fall, gibt der zentrale federvorgespannte Verschluß nach und schließt sich gegen die Vorspannkraft der in Öffnungsrichtung wirkenden Feder. Wird die oberseitige Kraft auf den Verschluß nicht mehr ausgeübt, beispielsweise durch Verrutschen der Ladung oder ein Weitergehen einer Person, öffnet sich der Verschluß durch Federkraft wieder von selbst.

Neben einer elektrischen Betätigung kann auch alternativ eine thermodynamische Betätigung eines verschließbaren Bodenausströmers vorgesehen sein, und zwar mit Hilfe eines Unterflur-Wärmedehnelementes, welches mit der Unterseite des federvorgespannten Verschlusses mechanisch gekoppelt ist. Das Wärmedehnelement liegt bei einem Betrieb des Unterflur-Heizgerätes der Raumheizung im Wärmestrom, wobei eine Luftrücklaufleitung als Beipaßleitung vorgesehen ist. Wird bei einem Heizbetrieb dem Wärmedehnelement Wärme zugeführt, dehnt dieses sich aus und hebt hierbei den zentralen Verschluß zusammen mit einer Feder an, so daß Wärme in den Innenraum des Fahrzeugs strömen kann. Das Wärmedehnelement ist gleichzeitig mit einem Schiebeverschluß mechanisch gekoppelt, welcher bei einem Anheben des zentralen Verschlusses gleichzeitig die Luftrücklaufleitung der Beipaß-Anordnung sperrt.

In einer einzigen Raumheizung können sowohl statische Bodenströmer als auch verschließbare Bodenströmer vorgesehen sein, welche elektrisch oder thermodynamisch betätigt werden können.

Durch die Erfindung wird auf einfache Weise eine Raumheizung für ein Nutzfahrzeug geschaffen, welche sehr zuverlässig im Betrieb ist und einfache statische und verschließbare Bodenströmer mit einem selbsttätigen Öffnen und Schließen eines anhebbaren Verschlusses vorsieht. Letztgenannter Verschluß ist so konzipiert, daß durch Begehen oder Befahren der Ladefläche keine Zerstörung der Raumheizung, insbesondere der Bodenströmer möglich ist. Auch ist das Unterflur-Heizgerät prinzipiell wasserdicht und schmutzdicht geschützt. Bei statischen Boden-Ausströmern kann der in den Ringraum eindringende Schmutz leicht durch Herausnehmen des inneren Einsatzes entfernt werden. Auf eine komplette aufwendige Heizanlage mit Spritzwasserabschirmung auf einer Rollpalette auf der Ladefläche des Nutzfahrzeugs kann verzichtet werden.

Die Erfindung wird nachfolgend anhand von Ausführungsbeispielen unter Bezugnahme auf die beigefügte Zeichnung näher erläutert. Es zeigen:
- Fig. 1: eine Raumheizung in Unterflurbauweise in schematischer Darstellung,
- Fig. 2: eine andere Raumheizung ähnlich Fig. 1,
- Fig. 3: ein Bodenströmer der Raumheizung gemäß den Fig. 1 und 2 in einer vertikalen Teil-Schnittansicht,
- Fig. 4: einen Bodenströmer in einer weiteren Ausgestaltung, und
- Fig. 5: einen Bodenströmer in einer dritten Ausführungsvariante.

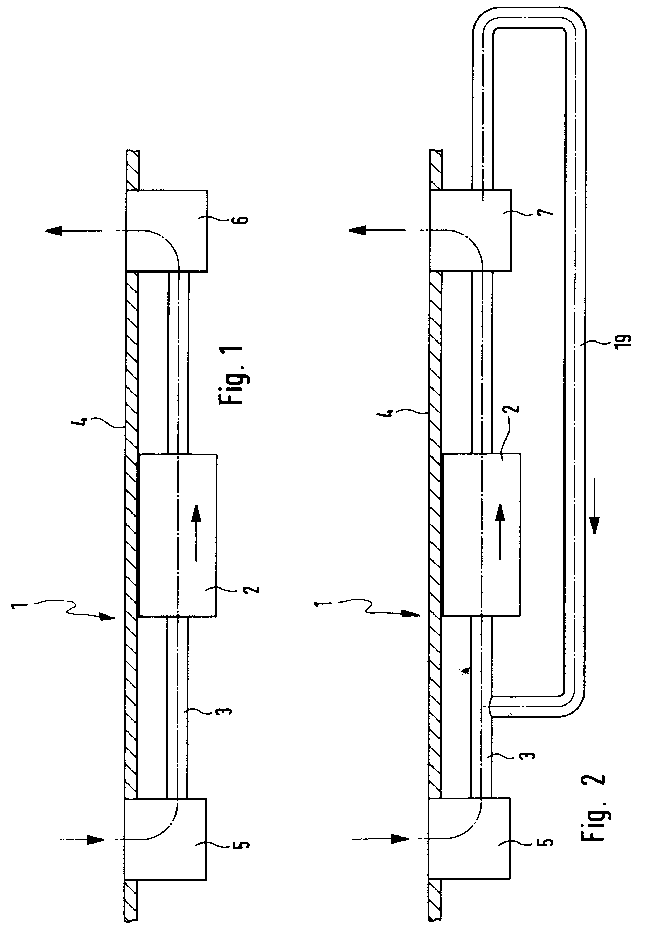

Die in Fig. 1 schematisch veranschaulichte Raumheizung 1 sieht unter der Ladefläche 4 eines nicht weiter interessierenden Nutzfahrzeuges ein Unterflur-Heizgerät 2 vor, welches über eine Unterflur-Luftversorgungsleitung 3 mit dem Innenraum des Nutzfahrzeuges in einer Verbindung steht, wobei in Höhe der Ladefläche 4 jeweils Bodenströmer 5, 6 vorgesehen sind, deren Oberseite exakt mit der Ladefläche 4 abschließt.

Gemäß Fig. 1 wird bei einem Betrieb der Raumheizung 1 durch Einschalten des Unterflur-Heizgerätes 2 Warmluft in Pfeilrichtung durch den Bodenströmer 6 in das Innere des Nutzraums transportiert, und gleichzeitig Luft durch den Bodenströmer 5 aus dem Inneren abgesaugt. Der Bodenströmer 6 ist mithin als Boden-Ausströmer vorgesehen, während der Bodenströmer 5 als Boden-Einströmer ausgebildet ist.

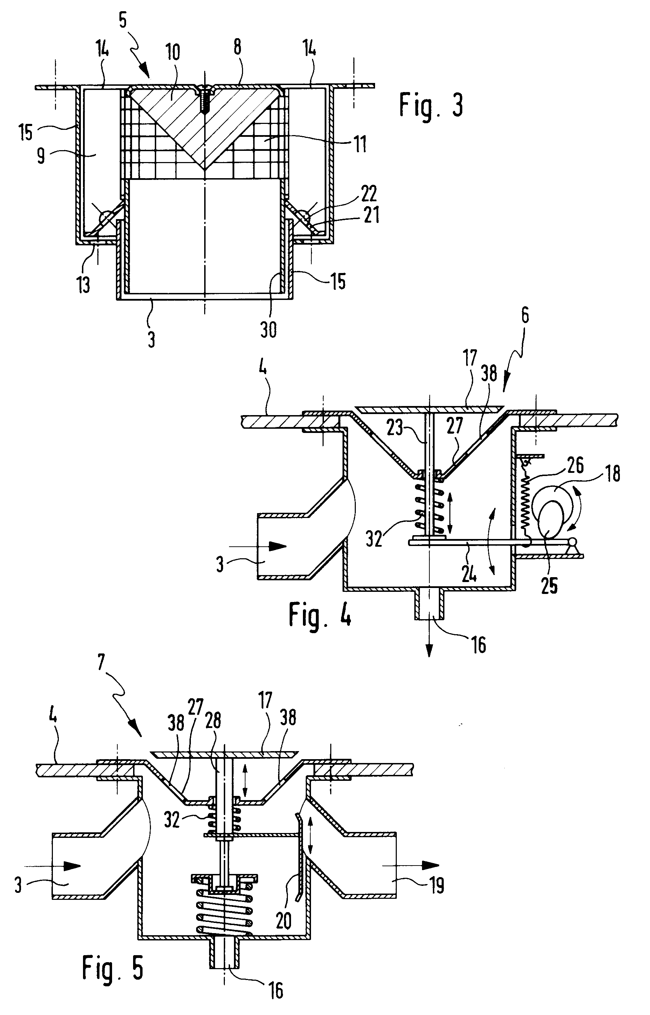

Letztgenannter Bodenströmer 5 ist ein statisches Bauteil und in größerer Einzelheit in Fig. 3 veranschaulicht.

Der statische Bodenströmer 5 gemäß Fig. 3 besitzt einen festen zentralen Verschluß 8 exakt in Höhe der Ladefläche 4, wobei die Unterflur-Luftversorgungsleitung 3 zentral bezüglich des Verschlusses von unten in den Bodenströmer 5 einmündet. Der Durchmesser der unteren Mündungsöffnung ist geringfügig kleiner als der Durchmesser des festen zentralen Verschlusses 8.

Unmittelbar in der Nachbarschaft des zentralen Verschlusses 8 befindet sich umfangsmäßig ein Ringraum 9, der oberseitig mit dem Nutzraum und radial innen über ein Gitterteil 11 mit der unteren Mündung der Unterflur-Luftversorgungsleitung in Verbindung steht.

Die Gesamtanordnung gemäß Fig. 3 ist so getroffen, daß der statische Bodenströmer 5 aus einem zylindrischen, abgesetzten Einsatzteil ausgebildet ist, welches in einem entsprechenden, abgesetzten Gehäuseteil 5 formschlüssig eingesetzt ist und gegebenenfalls nach oben herausgehoben werden kann, um Schmutz zu entfernen, der von oben in den Ringraum 9 eingedrungen ist. Das Einsatzteil weist ein unteres zylindrisches Teil 30 auf, welches oben mit dem zylindrischen Gitterteil 11 fest verbunden ist. Letztgenanntes Gitterteil 11 reicht bis hin zum oberen horizontal sich erstreckenden festen zentralen Verschluß 8 und ist mit diesem fest verbunden. Der zentrale Verschluß 8 ist an der Unterseite mit einer Luftumlenkeinrichtung 10 in Form eines Kegel verbunden, dessen Spitze zentral nach unten weist.

Die Außenseite des Gitterteils 11 weist vertikal verlaufende Radialstreben 14 auf, welche auf dem Umfang des Ringraums 9 gleich verteilt sind und sich radial nach außen bis hin zum Gehäuseteil 15 erstrecken, so daß ein Paßsitz eines Einsatzteils im Gehäuseteil 15 eingerichtet ist.

An der Unterseite des Ringraums 9 befindet sich ein Kegelstumpfabschnitt 21 in fester Verbindung mit dem Zylinderteil 30 und hat einem äußeren Radialflansch, welcher formschlüssig an die dortige Innenwandung des Gehäuseteils 15 angepaßt ist und für einen satten Sitz des Einsatzteils im Gehäuseteil 15 sorgt.

Im Kegelstumpfabschnitt 21 befinden sich Durchgangsöffnungen 22, durch welche Spritzwasser des Innenraums des Nutzfahrzeugs bis hin zu dem Boden der Abstufung des Gehäuseteils 15 gelangen kann, wo auch ein Wasserablauf 13 vorgesehen ist. Im Betrieb wirkt der Kegelstumpfabschnitt 21 als Schmutzfänger, durch den der Schmutz aus dem Ringraum 9 nach oben hochgehoben werden kann.

Der in Fig. 1 rechts veranschaulichte Boden-Ausströmer ist ein elektrisch verschließbarer Bodenströmer 6, der in größerer Einzelheit in Fig. 4 veranschaulicht ist.

Der Bodenströmer 6 gemäß Fig. 4 umfaßt einen seitlichen Eintritt einer Unterflur-Luftversorgungsleitung 3, welche vom Unterflur-Heizgerät 2 verlegt ist.

Ferner ist an zentraler unterer Stelle ein Wasserablauf 16 vorgesehen, der über ein Steigrohr oder direkt mit der Außenseite des Nutzfahrzeuges verbunden ist.

Der elektrisch verschließbare Bodenströmer 6 gemäß Fig. 4 sieht oberseitig einen anhebbaren zentralen Verschluß 17 vor, welcher durch eine Feder 32 vorgespannt ist. Die Unterseite des Stößels 23 des zentralen Verschlusses ist über ein Hebelsystem 24 mit dem Exzenterteil 25 eines elektrischen Antriebs 18 verbunden, dergestalt, daß bei einer Drehbewegung des elektrischen Antriebs 18 das Exzenterteil 25 die Hebebewegung des zentralen federvorgespannten Verschlusses 17 steuert. Der zentrale Verschluß wird durch die Kraft einer Feder 26 gegen die Feder 32 hochgehoben, wenn das Exzenterteil 25 seine geringste unterseitige Auslenkung hat. Bei größter Auslenkung des Exzenterteils 25 nach unten ist der zentrale Verschluß 17 verschlossen. Hierbei werden die Zugfeder 26 und die Druckfeder 32 gestreckt, und die Feder 32 drückt den Verschluß 17 auf das konische Einsatzteil 27 fest an. So ergibt sich beispielsweise kein unerwünschtes Öffnen bei einer Fahrt eines Nutzfahrzeuges auf holpriger Straße. Die Feder 32 ist in ihrer Charakteristik schwächer ausgelegt als die Feder 26.

Bodenströmer 6 weist ferner ein konisches Einsatzteil 27 auf, welches mit der Oberseite der Ladefläche 4 umfangsmäßig befestigt ist und als zentrale Führung des Stößels 23 und als Gegenhalt der Zugfeder 32 dient. Das konische Einsatzteil 27 weist Öffnungen 38 auf, durch welche die Warmluft aus der Unterflur-Luftversorgungsleitung 3 in das Innere des Nutzraums gelangen kann.

Die in Fig. 2 schematisch veranschaulichte Raumheizung 1 weist in Abänderung der Raumheizung 1 gemäß Fig. 1 auf der rechten Seite einen thermodynamisch verschließbaren Boden-Ausströmer 7 auf, der einen Anschluß für eine Beipaß-Leitung in Form einer Luftrücklaufleitung 19 in Richtung der Vorderseite des Unterflur-Heizgerätes 2 besitzt. Der in Fig. 2 linke Boden-Einströmer ist ein statischer Bodenströmer 5 gemäß Fig. 3 und ist identisch mit der Ausführungsvariante nach Fig. 1.

Der thermodynamisch verschließbare Bodenströmer 7 gemäß Fig. 2 ist in größerer Einzelheit in Fig. 5 gezeigt. Dieser ist im Prinzip aufgebaut wie der elektrisch betätigbare Bodenströmer 6 gemäß Fig. 4, weist jedoch anstelle des dortigen elektrischen Antriebs 8 und des Stößels 23 ein Wärmedehnelement 28,auf, welches bei Wärmeeinwirkung durch eintretende Warmluft aus der Unterflur-Luftversorgungsleitung 3 eine Wärmeausdehnung in Höhenrichtung nach oben erfährt. Das Wärmedehnungselement 28 ist also als zentraler Stößel des zentral anhebbaren Verschlusses dergestalt verbunden, daß bei Wärmeausdehnung der Verschluß 17 angehoben wird. Tritt dann eine Person von der Oberseite auf den geöffneten Verschluß, kann gleichwohl der Deckel gegen die Kraft der Feder 32 nach unten in die geschlossene Stellung bewegt werden. Die Feder 32 besitzt die gleiche Funktion wie die Feder 22 im Ausführungsbeispiel nach Fig. 4.

Die Gesamtkonstruktion gemäß Fig. 5 ist so getroffen, daß auch ein seitlicher Schiebeverschluß 20 vorgesehen ist, welcher mit dem Wärmedehnelement 28 mechanisch gekoppelt ist und bei einer Wärmeausdehnung des Wärmedehnelements 28 gleichzeitig die Beipaß-Leitung in Form der Luftrücklaufleitung 19 versperrt. Wird keine Wärme mehr auf das Wärmedehnelement 28 ausgeübt, nimmt dieses wieder seine eingezogene Stellung ein und verschließt hierbei den zentralen Verschluß 17.

Der vorgenannte Schiebeverschluß kann auch im Ausführungsbeispiel nach Fig. 4 vorgesehen sein.

Ferner kann ein zusätzllicher Schiebeverschluß beim Wasserauslaß 16 angebracht sein, und zwar sowohl beim Ausführungsbeispiel nach Fig. 4 als auch nach Fig. 5. Die Ankopplung an den Verschluß 17 ist dergestalt, daß bei einem Schließen des Verschlusses 17 der zusätzliche Schiebeverschluß öffnet und Schmutz und Wasser ausgestoßen wird.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Raumheizung (1) eines Nutzfahrzeuges mit Unterflur-Heizgerät (2) und Unterflur-Luftversorgungsleitungen (3) sowie mit Luftöffnungen ("Bodenströmern") in Höhe der Ladefläche (4) des Nutzraums für einen Austritt der Heizluft und einen Eintritt der Rückluft,
dadurch gekennzeichnet,
daß der Bodenströmer (5, 6 bzw. 7) eine Schutzvorrichtung gegen eindringenden Schmutz und eindringendes Wasser aus dem Nutzraum aufweist.

2. Raumheizung nach Anspruch 1,
dadurch gekennzeichnet,
daß ein statischer Bodenausströmer (5) vorgesehen ist, welcher in Höhe der Ladefläche (4) einen festen zentralen Verschluß für eine zentrale Unterflur-Luftversorgungsleitung (3) aufweist, wobei der Nutzraum über einen den zentralen Verschluß (8) umgebenden Ringraum (9) mit der zentralen Unterflur-Luftversorgungsleitung (3) in Verbindung steht.

3. Raumheizung nach Anspruch 3,
dadurch gekennzeichnet,
daß die Unterseite des zentralen Verschlusses (8) eine konische Luftumlenkeinrichtung (10) aufweist.

4. Raumheizung nach Anspruch 2 oder 3,
dadurch gekennzeichnet,
daß der Ringraum (9) radial innen durch ein zylindrisches Gitterteil (11) begrenzt ist.

5. Raumheizung nach Anspruch 2 bis 4,
dadurch gekennzeichnet,
daß die Unterseite des Ringraums (9) mit einem Schmutzfänger und einem Wasserablauf (13) ausgebildet ist.

6. Raumheizung nach den Ansprüchen 2 bis 5,
dadurch gekennzeichnet,
daß der statische Bodenströmer (5) ein zylindrisches, im Ringraum (9) Radialstreben (14) aufweisendes, abgesetztes Einsatzteil aufweist, welches in einem entsprechenden, im Boden des Nutzraums befestigten Gehäuseteil (15) formschlüssig eingesetzt ist, wobei das Einsatzteil den zentralen Verschluß (8), und gegebenenfalls die Luftumlenkeinrichtung (10), das Gitterteil (11), den Ringspalt-Schmutzfänger sowie einen Ringspalt-Wasserdurchlauf enthält.

7. Raumheizung nach Anspruch 1,
dadurch gekennzeichnet,
daß der Bodenströmer (6, 7) einen zentralen unteren Wasserablauf (16), einen seitlichen Anschluß für die Unterflur-Luftversorgungsleitung (3) und einen betätigbaren zentralen federvorgespannten Verschluß (17) aufweist, welcher in eine angehobene geöffnete Stellung und in eine abgesenkte bündig mit der Ladefläche (4) verlaufende geschlossene Stellung betätigt werden kann.

8. Raumheizung nach Anspruch 7,
dadurch gekennzeichnet,
daß der federvorgespannte Verschluß (17) über einen elektrischen Antrieb (8) durch einen elektrischen Impuls des Unterflur-Heizgerätes (2) betätigbar ist.

9. Raumheizung nach Anspruch 7,
dadurch gekennzeichnet,
daß der federvorgespannte Verschluß (17) über ein Wärmedehnelement (28) thermodynamisch betätigbar ist, wobei die Wärme dem Wärmedehnelement über die Unterflur-Luftversorgungseinrichtung (3) vom Unterflur-Heizgerät (2) zuführbar ist.

10. Raumheizung nach Anspruch 9,
dadurch gekennzeichnet,
daß der verschließbare Bodenausströmer (6, 7) eine seitliche Luftrücklaufleitung (19) aufweist, welche mit einem Schiebeverschluß (20) versehen ist, der an das Wärmedehnelement oder einen Stößel (23) des federvorgespannten Verschlusses (17) für eine selbstätige Betätigung gekoppelt ist, wobei der Schiebeverschluß in der angehobenen Stellung des federvorgespannten Verschlusses (17) die Luftrücklaufleitung (19) versperrt.

11. Raumheizung nach einem der Ansprüche 1 bis 10,
dadurch gekennzeichnet,
daß die Bodenströmer als Boden-Einströmer und/oder als Boden-Ausströmer vorgesehen sind.

12. Raumheizung nach einem der Ansprüche 1 bis 11,
dadurch gekennzeichnet,
daß statische Bodenströmer (5) und/oder elektrisch betätigbare Bodenströmer (6) und/oder thermisch betätigbare Bodenströmer (7) in einer Unterflur-Raumheizung vorgesehen sind.
